**Europäisches Patentamt**

**European Patent Office**

**Office européen des brevets**

(11) Veröffentlichungsnummer: **0 278 512**
**B1**

(12) **EUROPÄISCHE PATENTSCHRIFT**

(45) Veröffentlichungstag der Patentschrift:
04.07.90

(51) Int. Cl.5: **B23F 5/04**, B23F 21/02

(21) Anmeldenummer: 88102032.5

(22) Anmeldetag: 11.02.88

(54) Verfahren zur Bearbeitung von Zahnrädern.

(30) Priorität: 13.02.87 DE 3704607

(43) Veröffentlichungstag der Anmeldung:
17.08.88 Patentblatt 88/33

(45) Bekanntmachung des Hinweises auf die Patenterteilung:
04.07.90 Patentblatt 90/27

(84) Benannte Vertragsstaaten:
DE FR GB IT SE

(56) Entgegenhaltungen:
CH-A- 440 915
CH-A- 458 885

PATENT ABSTRACTS OF JAPAN, Band 9,
Nr. 223 (M-411)[1946], 10. September 1985; &
JP-A-60 80 520 (FANUC K.K.) 08-05-1985

(73) Patentinhaber: Liebherr-Verzahntechnik GmbH,
Postfach 1960, D-8960 Kempten(DE)

(72) Erfinder: Sulzer, Gerd, Dr., Simmlers 3,
D-8961 Wiggensbach(DE)

(74) Vertreter: Klunker . Schmitt-Nilson . Hirsch,
Winzererstrasse 106, D-8000 München 40(DE)

## Beschreibung

Die Erfindung betrifft ein Verfahren zum Wälzschleifen von schrägverzahnten Zahnrädern im kontinuierlichen Diagonalwälzverfahren mit einem Werkzeug in Form einer in wesentlichen evolventischen Schnecke, deren nutzbare Länge größer als die Länge des Arbeitsbereichs ist und deren Achsabstand zum Zahnrad während ihrer Vorschubbewegung in Richtung der Diagonalen aus Axial- und Tangentrialrichtung zum Erzeugen einer Breitenballigkeit verändert wird.

Nach dem Diagonalwälzverfahren arbeitende Verzahnmaschinen sind sowohl bei der spanenden Zahnradfertigung, wie dem Wälzfräsen, als auch bei der Feinbearbeitung vorverzahnter Zahnräder, wie dem Schälwälzfräsen und Wälzschleifen bekannt. Die Flankenform beim Wälzfräsen entsteht dabei als Einhüllende einzelner Werkzeugschnittflächen. Die relative Werkzeuglage, bezogen auf das Werkrad, ändert sich durch das Abwälzen des Werkrads am Werkzeug kontinuierlich. Die Zahnflanken werden nicht exakt ausgebildet, sondern durch eine endliche Zahl von Hüllschnitten facettenartig angenähert. Jeder Hüllschnitt des Hüllschnittprofils berührt das theoretische Evolventenprofil in einem Punkt, alle übrigen Punkte weichen vom Evolventenprofil mehr oder weniger stark ab. Im Ergebnis wird dadurch eine schuppenartige Oberflächenstruktur erzeugt, die in nachgeschalteten Feinbearbeitungsverfahren, wie dem Wälzschleifen, beseitigt wird.

Das theoretisch exakte Evolventenprofil wird jedoch für eine Optimierung des Tragverhaltens und eine Minimierung der Geräuschentwicklung abgeändert. Üblich ist beispielsweise die Erzeugung einer bestimmten Höhenballigkeit (Kopfrücknahme) zur Erreichung eines möglichst stoßfreien Laufs. Das durch die Kopfrücknahme erzeugte Flankeneintrittsspiel ist darüberhinaus für die Bildung eines Ölfilms zwischen den arbeitenden Zahnflanken wichtig. Man erreicht diese Höhenballigkeit bzw. Kopfrücknahme durch ein entsprechendes Profilieren der Flanken des Werkzeugs. Eine Korrektur der Flankengeometrie über die Breite der Zahnlücke, also eine bestimmte Breitenballigkeit oder auch Konizität der Zahnlücke und Schieflage der Balligkeit erfolgt durch entweder dem Werkrad oder dem Werkzeug erteilte Zusatzbewegungen, die den Achsabstand zwischen Werkzeug und Zahnrad beim axialen Durchfahren der Zahnlücke ändern. Im Fall der Flankenkorrektur geradverzahnter Stirnräder führt dieses Verfahren durchaus zum gewünschten Ergebnis, da aufgrund des geringen Kreuzungswinkels der Werkzeugachse gegenüber der Werkstückstirnfläche das Erzeugungsachsschnittprofil annährend in der Stirnschnittebene des Werkstücks liegt, d.h. ein bestimmter Achsabstand wirkt sich auf die beiden Flanken einer Zahnlücke in ein und derselben Achsschnittebene aus.

Für den Fall jedoch, daß der Achskreuzwinkel zwischen Werkrad und Werkzeug von 90° verschieden ist, also beispielsweise nur etwa 60° beträgt, bedingen die dadurch geänderten Eingriffsverhältnisse eine ungleiche Korrektur der sich entsprechenden linken und rechten Flanken einer Zahnlücke. Dies beruht darauf, daß die Eingriffslinie bzw. die Durchdringungskurve zwischen Werkzeug und Werkrad nicht in einer zur Werkradachse senkrechten Ebene (xy-Ebene) liegt, sondern zu dieser Ebene geneigt ist. Korrekturen, die durch eine radiale Zustellbewegung des Werkzeugs gegenüber der Werkstückachse erzeugt werden, wirken sich daher nicht in einer zur Werkradachse senkrechten Ebene aus, sondern werden in verschiedener Höhe, bezogen auf die Zahnlücke, wirksam. Das Ergebnis ist eine Verzerrung bzw. Verwindung des Flankenprofils, insbesondere im Einlaufbereich und Auslaufbereich einer Zahnlücke. Diese Verzerrungen bedeuten erhöhte Geräuschentwicklung, verstärkten Verschleiß durch ungleichmäßigen Lauf und schlechtes Tragverhalten.

Zur Optimierung von Geräuschentwicklung, Lebensdauer und Tragfähigkeit von Zahnradgetrieben ist es erforderlich, die Flankengeometrie individuell hinsichtlich Richtung und Profilform korrigieren zu können. Schieflage und Größe der Balligkeit können am Zahnfuß, in der Zahnmitte und am Zahnkopf unterschiedlich sein, wobei die Werte für die Zugflanke wiederum anders sein können, als für die Schubflanke.

Zahnlängskorrekturen wie Breitenballigkeit werden üblicherweise durch kombinierte Radial-Axial-Bewegung, d.h. eine Änderung des Achsabstandes während der Axialbewegung des Werkzeugs durchgeführt. Durch die Tatsache, daß die Eingriffsebene zwischen Werkzeug und Werkstück zur Werkstückstirnfläche gekreuzt liegt, entstehen Verzerrungen, deren Größe direkt abhängig ist von der gewählten Korrektur des Achsabstandes, der Radbreite und der räumlichen Erstreckung des Fräsearbeitsbereichs. Die Verzerrungen sind umso größer, je größer der Schrägungswinkel, je kleiner der Eingriffswinkel, und je größer die Frästiefe sind. Zusätzlich sind sie abhängig von der Profilverschiebung am Werkstück. Bei Schrägungswinkeln von ca. 30° können die auftretenden Verzerrungen durchaus größer sein, als die gewünschten Korrekturen selbst.

Üblicherweise werden Flankenkorrekturen nur in der Mitte zwischen Fuß und Kopf und Profilkorrekturen nur auf der halben Radbreite gemessen, so daß die am Zahnlückenein- bzw. -auslauf auftretenden Verzerrungen häufig überhaupt nicht festgestellt werden.

Der Erfindung liegt die Aufgabe zugrunde, Zahnlängskorrekturen durch Achsabstandsänderungen zuzulassen, gleichzeitig jedoch deren nachteilige Verzerrungen zu vermeiden.

Erfindungsgemäß wird diese Aufgabe durch die im Kennzeichen des Patentanspruchs angegebenen Merkmale gelöst. Entscheidend für die Erfindung ist die Erkenntnis, daß jedem Bereich einer Zahnlücke (in axialer Richtung des Zahnrades gesehen) ein bestimmter axialer Bereich der Werkzeugschnecke zugeordnet ist. Da sich die Flankengeometrie der Windungen der Schnecke in axialer Richtung ändert, wird die zu erzeugende Zahnlücke über die Zahnlückenbreite von einem sich quasi ständig ändernden Werkzeug hergestellt. Während der Wälzbewegung zwischen Werkrad und Werkzeug wird die Schnecke nicht nur axial zum Werkrad, sondern auch tangential zu diesem verschoben, so daß über die Höhe bzw. Breite des Werkrads gesehen, der Einlaufbereich einer Zahnlücke von anderen Schneckenwindungen bearbeitet wird, als der Auslaufbereich dieser Zahnlücke.

Um einerseits die gewünschten Korrekturehn an den Evolventenzähnen des Werkstücks zu erreichen, und um andererseits die beschriebenen Verzerrungen zu vermeiden, weisen die Werkzeugzähne an linker und rechter Flanke unterschiedliche Eingriffswinkel auf, zudem ändern sich Eingriffswinkel und Zahndicke von einem Ende des Werkzeugs in Achsrichtung laufend so, daß in Verbindung mit einer Achsabstandskorrektur (abhängig von der momentanen Lage des Werkzeugs bezüglich der Zahnradhöhe) deren Verzerrungswirkung ausgeglichen wird.

Die tangentiale Verschiebung des Werkzeugs gegenüber dem Werkrad über die Länge des Arbeitsbereichs hinaus ist an sich im Zusammenhang mit dem Diagonalfräsen bekannt. Die bekannte Tangentialverschiebung hat jedoch lediglich das Ziel, eine bessere Werkzeugausnutzung und längere Standzeiten zu ermöglichen. Die bekannten Wälzfräser haben ein über ihre axiale Länge gleichbleibende Flankengeometrie.

Aus "Pfauter-Wälzfräsen", Teil 1, Verfahren, Maschinen, Werkzeuge, Anwendungstechnik, Wechselräder, Springer-Verlag, S. 436 ist es bereits bekannt, zur Erzeugung breitenballiger Verzahnungen Wälzfräser mit in Richtung seiner Achse unterschiedlicher Zahndicke und Zahnform zu verwenden und im Diagonalverfahren zu arbeiten. Der Wälzfräser wird bei diesem Verfahren so eingestellt, daß seine größte Zahnlücke in der Mitte der Werkstückverzahnung zum Arbeiten kommt, dort also die größte Zahndicke entsteht. An beiden Enden arbeiten dickere Fräserzähne, d.h. die Werkstückzähne werden dort dünner (Doppel-Duplex-Charakter).

Das bekannte Verfahren eignet sich jedoch nur zur Erzeugung der Breitenballigkeit von geradverzahnten Stirnrädern. Würde man das Verfahren bei Schrägstirnrädern anwenden, ergäben sich wieder die schon erwähnten Verzerrungen bedingt durch die Schräglage der Eingriffsebene zur Stirnschnittebene des Zahnrads.

Die Erfindung geht isofern einen anderen Weg, als die Breitenballigkeit in zunächst konventioneller Art und Weise durch eine Achsabstandskorrektur erfolgt. Dabei entfernt sich das Werkzeug während des Axialvorschubs vom Zahnrad und wird nach Überlaufen eines Maximums wieder zugestellt. Die Steuerung dieses Radialvorschubs kann entweder mechanisch, elektrisch oder auch elektronisch erfolgen. Dieses Verfahren führt bei Schrägstirnrädern notwendigerweise zu erheblichen Verzerrungen des Flankenprofils am Zahnlückeneinlauf und am Zahnlückenauslauf, die spiegelbildlich zueinander sind. Diese Verzerrungen werden erfindungsgemäß dadurch beseitigt, daß die Eingriffswinkel der Flanken der Werkzeugschnecke sich über die Länge der Schnecke ändern. Einem bestimmten Bereich der Zahnlücke ist jeweils ein bestimmter Bereich des Werkzeugs und ein bestimmter Herstellungsachsabstand zugeordnet. Damit ist eine Annäherung an das idealkorrigierte Flankenprofil von Schrägverzahnungen erstmals möglich.

Nachfolgend wird die Erfindung anhand der beigefügten Zeichnung näher erläutert.

Darin zeigen:

Fig. 1 eine perspektivische Ansicht einer Zahnlücke mit schematisch angedeuteten Korrekturen,

Fig. 2 die schematische Darstellung einer Wälzschleifmaschine,

Fig. 3a-d die schematische Darstellung der Soll- und Ist-Geometrie einer Zahnflanke bei einer Flankenkorrektur nach dem Stand der Technik und der Erfindung,

Fig. 4 die relative Position von Werkzeug und Werkrad beim Abwälzverfahren,

Fig. 5a-c die schematische Darstellung der in Achsrichtung unterschiedlichen Flankengeometrie einer Werkzeug-Schnecke nach der Erfindung,

Fig. 6a,b eine schematische Darstellung der Eingriffsverhältnisse zwischen Werkzeug und Werkrad beim Bearbeiten der Zahnlücken eines schrägverzahnten Stirnrades.

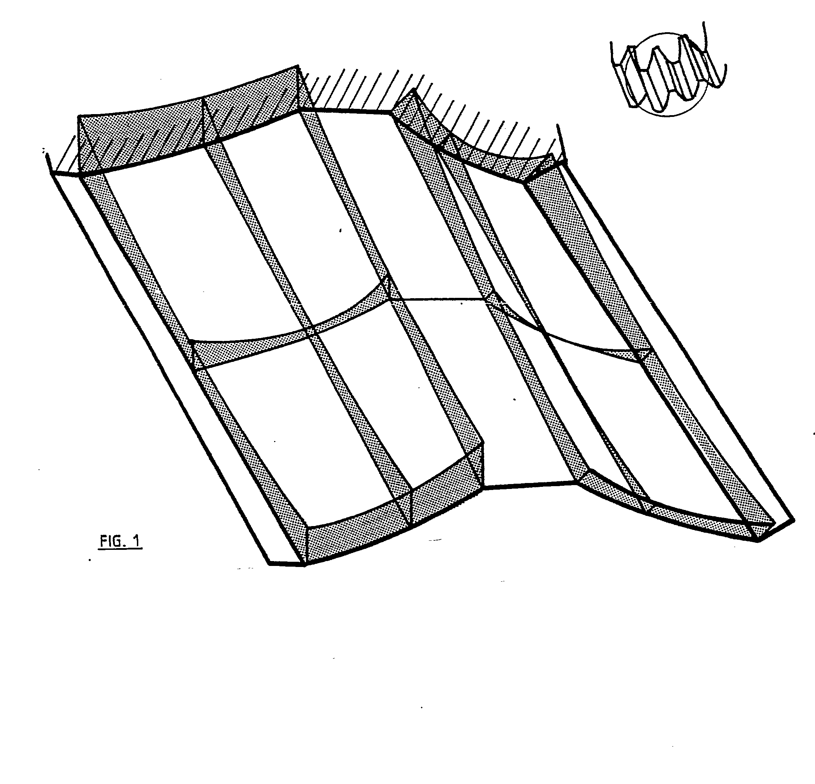

Unter Bezugnahme auf Fig. 1 versteht man unter den möglichen Flankenkorrekturen in erster Linie die Balligkeit, die konvex oder konkav sein kann, die am Zahnfuß, in Zahnmitte oder am Zahnkopf unterschiedliche Beträge aufweisen kann und die bezogen auf die Mittelebene der Zahnlücke gerade, aber auch schief verlaufen kann (Konizität). Für einen glatten und geschmeidigen Eingriff müssen die Zahnflanken nicht nur eine Längsballigkeit aufweisen, sondern es müssen auch Korrekturen vom Fuß zum Kopf erfolgen. So wird der Kopf am Einlauf und Auslauf der Zahnlücke etwas zurückgenommen, um ein Kantentragen zu verhindern. Natürlich darf die Rücknahme nicht übermäßig groß sein, um das aktive Profil nicht zu sehr zu verkürzen. Die Bezugsflanke in der Zeichnung ist das theoretisch exakte Evolventenprofil. Die Figur zeigt die perspektivische Draufsicht auf eine Zahnlücke, in der Mitte befindet sich der Fuß bzw. Zahngrund, die Zahnflanken steigen nach links bzw. rechts jeweils zum Kopf an. Wie sich aus der Zeichnung erkennen läßt, sind beide Flanken unterschiedlich korrigiert, um damit der unterschiedlichen Verformung der Schub- bzw. Zugflanke unter Last zu entsprechen.

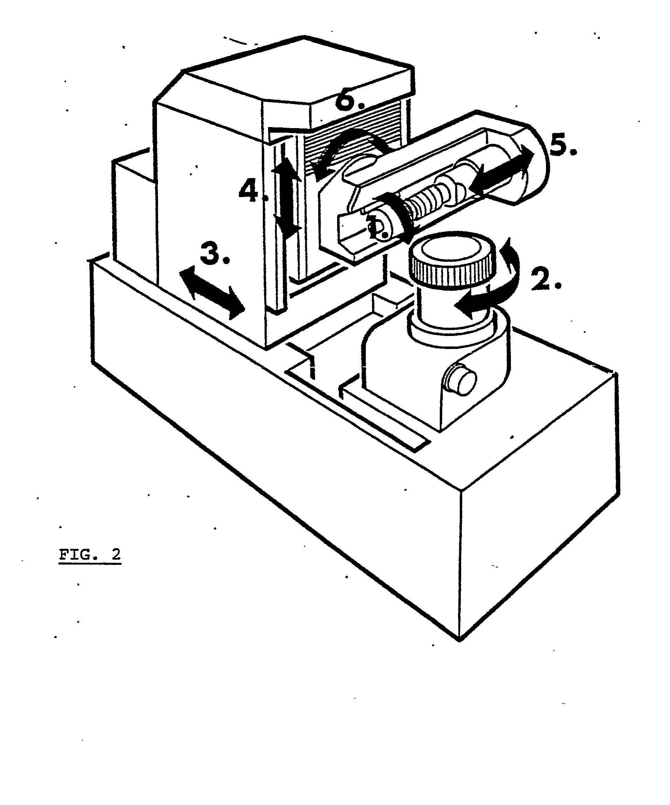

Das erfindungsgemäße Verfahren kann beispielsweise in einer in Fig. 2 schematisch dargestellten Maschine zum Wälzschleifen von evolventischen Verzahnungen angewandt werden. Auf dem Maschinenbett befindet sich der ortsfeste Werkstücktisch, auf dem das Werkstück, beispielsweise ein vorverzahntes Zahnrad, mit einer entsprechenden Aufspannvorrichtung mit senkrechter Achse festgespannt wird. Das Werkstück kann zur Wälzkopplung mit der Werkzeugschnecke um seine senkrechte Achse gedreht werden. Die Bewegung ist durch den mit 2 bezeichneten Pfeil symbolisiert.

Der radial verschiebbare Hauptständer (die radiale Zustellrichtung ist mit dem mit 3 bezeichneten Pfeil symbolisiert) trägt einen Tagentialschlitten zur tangentialen Verschiebung der Werkzeugschnecke (diese Verschieberichtung ist mit dem mit 5 bezeichneten Pfeil gekennzeichnet). Der Tangentialschlitten kann darüberhinaus axial verfahren werden (Pfeil 4) und um eine horizontale Achse verschwenkt werden (Pfeil 6).

Die Relativbewegung zwischen Werkzeugschnecke und dem Werkrad entspricht im wesentlichen der Paarung einer Schnecke mit einem Schneckenrad, wobei die Schnecke das Werkzeug und das Schneckenrad das zu fertigende bzw. feinzubearbeitende Werkrad darstellt. Zur Materialabtragung dienen die rotatorischen Bewegungen des Werkzeugs einerseits und des Werkrads andererseits. Vor Schnittbeginn wird radial bis zur benötigten Tauchtiefe zugestellt und dann axial im Gleichlauf oder Gegenlauf gespant. Zusätzlich zur rotatorischen Bewegung der Schnecke wird diese um einen bestimmten Betrag trangential verschoben, so daß sich der Vorschub des Werkzeugs aus einer axialen und einer tangentialen Komponente zusammensetzt. Abhängig von der axialen Vorschubkomponente, findet noch eine radiale, über Schablonen oder durch Programm gesteuerte Zustellung des Werkzeugs zur Erzeugung von Längsballigkeit und Konizität statt.

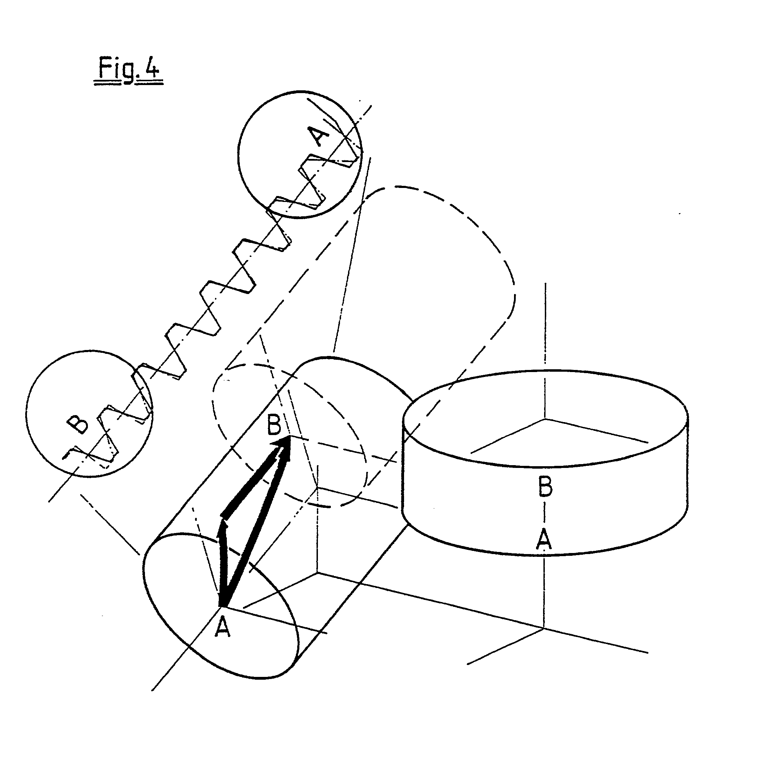

In Fig. 4 ist die relative Position von Werkzeug und Werkstück schematisch gezeigt. Die mit durchgezogenen Linien gezeigte Position entspricht dem Beginn der Bearbeitung, d.h. dem Bearbeiten des Einlaufsbereichs einer Zahnlücke. Das Werstück dreht sich um eine senkrechte Achse, während das Werkzeug mit einer axialen und einer tangentialen Komponente am Werkstück vorbeigeführt wird. Die resultierende Bewegung ist in dem Vektordiagramm angedeutet. Die strichlierte Position des Werkzeugs entspricht einer Flankenbearbeitung beim Verlassen der Zahnlücke.

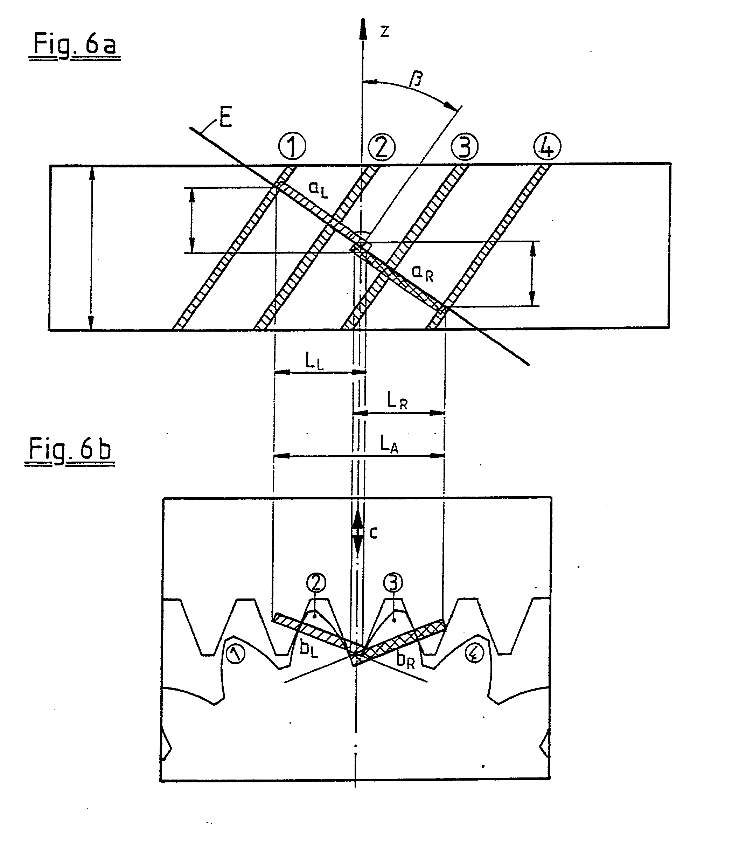

Die Eingriffsverhältnisse zwischen Werkzeugschnecke und Werkstück sind in Fig. 6a und 6b dargestellt. Die auf eine Achsschnittebene des Werkstücks projizierte Durchdringungskurve ist in Fig. 6a mit E gezeigt. Sie markiert die Eingriffsebene aller gleichzeitig ausgebildeten Punkte des Flankenprofils. Wie sich unter Bezugnahme auf Fig. 6a ersehen läßt, befinden sich die rechten Flanken des Werkzeugs und Werkrad nur über die Eingriffsstrecke $a_R$ im Eingriff, die linken Flanken über die Eingriffsstrecke $a_L$. Daraus resultieren die Eingriffslängen $L_L$ und $L_R$ zwischen Werkzeug und Zahnrad für die linke und rechte Flanke. Die gesamte Länge wird als sogenannte Profilausbildungszone oder Länge des Arbeitsbereichs $L_A$ definiert. Unter Bezugnahme auf Fig. 6b ist ersichtlich, daß diese Länge im Achsabschnitt des Werkzeugs etwa drei Windungen umfaßt. Die Teile der Werkzeuglänge, die vor dem Arbeitsbereich bzw. hinter ihm liegen, stehen für eine tangentiale Werkzeugverschiebung zur Verfügung. $b_L$ bzw. $b_R$ bezeichnen die auf eine Stirnschnittebene projizierten Eingriffsstrecken. Mit c ist die Korrekturbewegung zur Erzeugung der Balligkeit bzw. Konizität angedeutet.

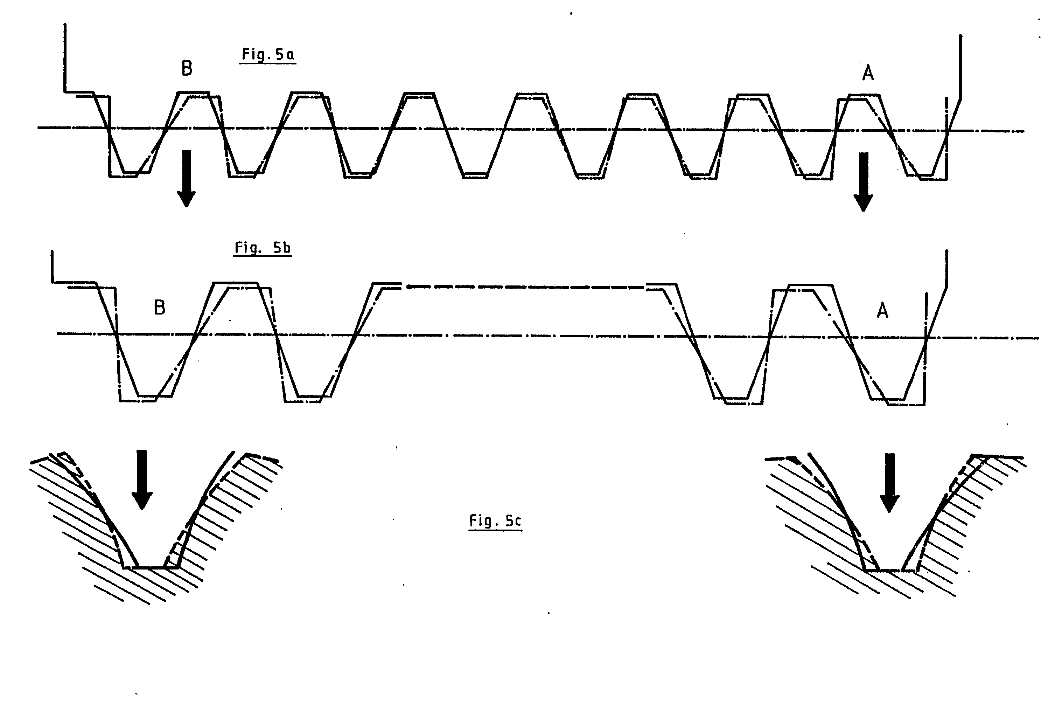

Fig. 5a zeigt schematisch einen Achsschnitt durch mehrere Windungen einer Werkzeugschnecke, wobei der rechts mit A bezeichnete Bereich beim Durchlaufen einer Zahnlücke von unten nach oben im unteren Bereich der Zahnlücke zum Eingriff kommt und der mit B bezeichnete Zahn bzw. diese Schneckenwindung mit dem oberen Bereich der Zahnlücke. Beispielsweise kann der Zahn oder die Schneckenwindung des Werkzeugs bei A so profiliert sein, daß er im Fußbereich der rechten Zahnflanke mehr Material wegnimmt, als im Fußbereich der linken Zahnflanke. Die theoretisch exakte Profilform des Werkzeugs im Bereich A ist mit durchgezogenen Linien in Fig. 5 a und 5b angedeutet. Die tatsächliche, abgeänderte Profilform ist strichpunktiert angedeutet. In Fig. 5c ist dann das Ergebnis schematisch gezeigt. Die gestrichelte Kurve zeigt das theoretisch exakte Flankenprofil, während die ausgezogene Kurve die Soll-Korrektur zeigt.

Im Bereich B ist das Werkzeug so profiliert, daß es im Fußbereich der linken Flanke mehr Material wegnimmt, als im Fußbereich der rechten Flanke. Wieder ist der theoretisch exakte Profilverlauf des Werkzeugs in den Fig. 5a und 5b mit durchgezogenen Linien angedeutet, während die strichpunktierte Linie das korrigierte Flankenprofil zeigt. In Fig. 5c ist das Ergebnis dargestellt. Die gestrichelt Linie bedeutet wieder das theoretisch exakte Profil, während die durchgezogene Linie die korrigierte Flanke zeigt.

Wie aus dem aufgeklappten Achsschnitt des Werkzeugs in Fig. 4 ersichtlich wird, verschiebt sich das Werkzeug beim Durchlaufen der Zahnradbreite vom Bereich A bis zum Bereich B. Im unteren Bereich der Zahnlücke erfolgt daher eine andere Flankenkorrektur als im oberen Bereich der Zahnlücke. Aus der Schemazeichnung ist ersichtlich, daß die Mitte der Zahnlücke mit einem Schneckenprofil bearbeitet wird, das von der theoretisch exakten Form kaum abweicht. Über die Breite bzw. Höhe der Zahnlücke gesehen, ist jedem Zahnlückenbereich ein anderer axialer Bereich des Werkzeugs zugeordnet.

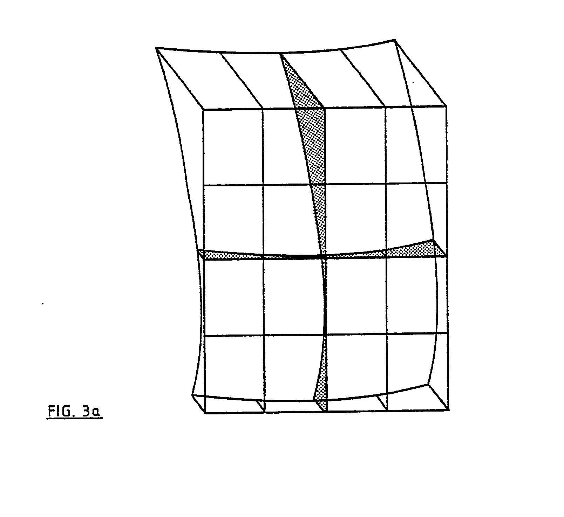

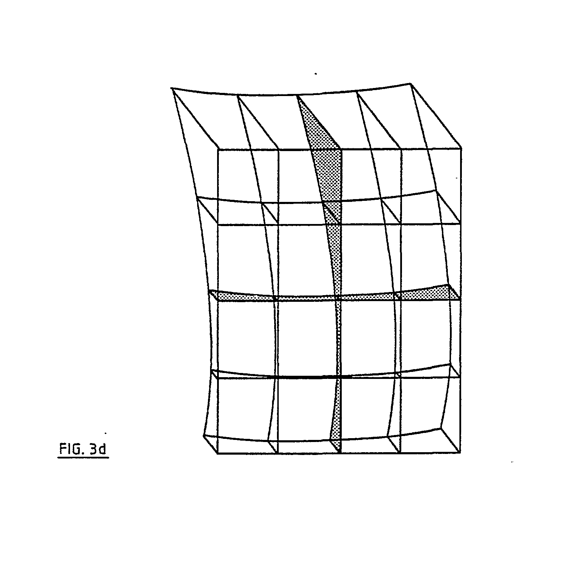

Der Effekt der erfindungsgemäßen Flankenkorrektur ist in den Fig. 3a bis 3d schematisch gezeigt. Fig. 3a stellt die Soll-Geometrie einer Zahnflanke dar, wobei die xy-Ebene die exakte Evolventenfläche bedeutet, von welcher in Längsrichtung der Falnke, sowie vom Fuß bis zum Kopf verschiedene Abmaße abgetragen werden sollen. In der Zeichnung bedeutet die rechte Kante den Zahnfuß, die linke Kante des Zahnkopf, die Oberkante den Auslauf der Zahnlücke und die Unterkante den Einlauf der Zahnlücke. Die Flankenkorrekturen bewegen sich etwa im Bereich 5 bis 20 Mikrometer. Man sieht aus Fig. 3a recht deutlich, daß die gewünschte Kopfrücknahme am Auslauf wesentlich stärker sein soll, als am Einlauf der Zahnlücke, auch die Längsballigkeit ist unsymmetrisch.

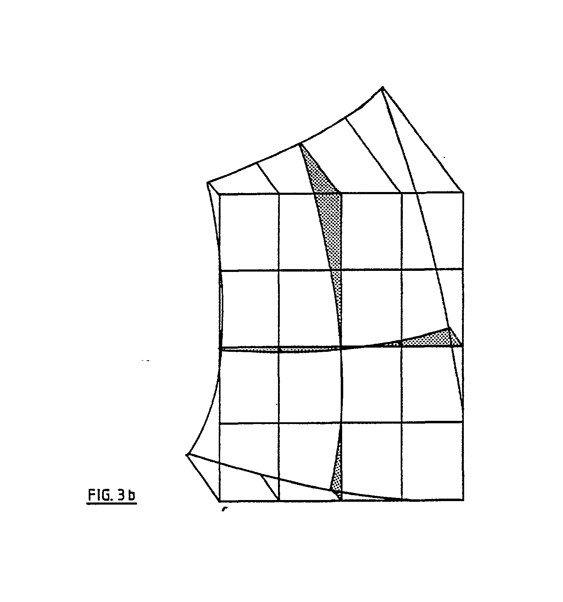

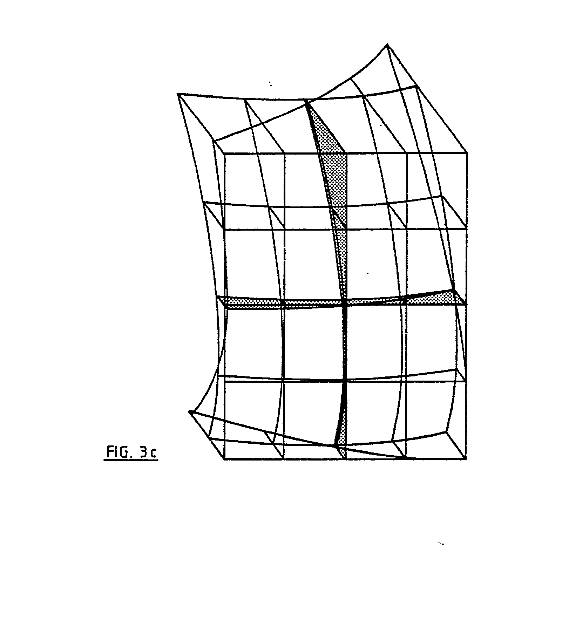

Fig. 3b gibt die Flankengeometrie an, die mit einem normalen Werkzeug, d.h. einer Schleifschnecke mit gleichbleibender Flankengeometrie und verändertem Achsabstand über die Zahnbreite erreicht werden kann. Die Balligkeit in der Mitte der Zahnhöhe, als der Mitte zwischen Kopfzylinder und Fußzylinder entspricht dem gewünschten Wert, durch die Schieflage der Eingriffsebene kommt es aber am Kopf und Fuß zu einer unerwünschten Verzerrung, da die radiale Zustellung zur Erzeugung der Längsballigkeit nur für die Zahnmitte stimmt. Ein Vergleich der Soll-Geometrie mit der nach dem Stand der Technik erreichbaren Geometrie ist in Fig. 3c dargestellt. Die Abweichung von der Soll-Geometrie ist am Auslauf der Zahnlücke, d.h. in der Zeichnung rechts oben besonders groß. Für eine Rechtsflanke ergeben sich betragsmäßig ähnliche, in der Verteilung jedoch zum Teil gegenläufige Verzerrungen.

Fig. 3d zeigt schließlich einen Vergleich zwischen der Soll-Geometrie und der erzeugten Geometrie bei Anwendung des erfindungsgemäßen Verfahrens. Ein Vergleich der Fig. 3c und 3d ergibt klar, daß durch die Anwendung des erfindungsgemäßen Verfahrens eine nahezu perfekte Anpassung der Ist-Geometrie an die Soll-Geometrie erreicht werden kann.

## Patentansprüche

1. Verfahren zum Wälzschleifen von schrägverzahnten Zahnrädern im kontinuierlichen Diagonalwälzverfahren mit einem Werkzeug in Form einer im wesentlichen evolventischen Schnecke, deren nutzbare Länge größer als die Länge des Arbeitsbereichs ist und deren Achsabstand zum Zahnrad während ihrer Vorschubbewegung in Richtung der Diagonalen aus Axial- und Tangentialrichtung zum Erzeugen einer Breitenballigkeit verändert wird, dadurch **gekennzeichnet,** daß der Eingriffswinkel der Rechts- bzw. Linksflanken von einem Maximalwert an einem Ende der Schnecke augsehend zum anderen Ende hin kontinuierlich abnimmt, wobei der maximale Ein griffswinkel der Rechtsflanken an einem Ende der Schnecke mit dem minimalen Eingriffswinkel der Linksflanken zusammenfällt und umgekehrt.

## Claims

Process for roll grinding obliquely toothed gears in a continuous diagonal hobbing process with a tool in the form of an essentially involute worm, the usable length of which is greater than the length of the working region and the axial distance of which to the gear is altered during its forwarding motion in the direction of the diagonal from the axial and tangential direction to generate a width crowning, characterised in that the pressure angle of the left and right flanks continuously reduces from a maximum value starting at one end of the worm to the other end, wherein the maximum pressure angle for the right flanks coincides at one end of the worm with the minimum pressure angle fo the left flank and vice versa.

## Revendications

Procédé de rectification par développante d'engrenages à dentures hélicoïdales selon un procédé par développante en diagonales au moyen d'un outil se présentant sous la forme d'une vis sans fin essentiellement en développante dont la longueur utile est supérieure à la longueur de la zone de travail et dont l'entraxe par rapport à la roue dentée est modifié pendant son avance en direction des diagonales à partir d'une direction axiale et tangentielle pour produire un bombé longitudinal, caractérisé en ce que l'angle d'engrènement des flancs droits et gauches part d'une valeur maximale à une extrémité de la vis sans fin et diminue continuellement en direction de l'autre extrémité, l'angle d'engrènement maximal des flancs droits à une extrémité de la vis sans fin coïncidant avec l'angle d'engrènement minimal des flancs gauches et inversement.

FIG. 1

FIG. 2

FIG. 3a

FIG. 3 b

FIG. 3c

FIG. 3d

Fig. 4

Fig. 5a

Fig. 5b

Fig. 5c

A

B

Fig. 6 a

Fig. 6 b